# EUROPEAN PATENT APPLICATION

(11) **EP 2 317 745 A1**
(43) Date of publication of application: **04.05.2011**
(21) Application number: 09809233.1
(22) Date of filing: 25.08.2009
(51) Int. Cl.: H04M 3/00

(54) **METHOD, DEVICE FOR PLAYING MULTIMEDIA COLOR RING BACK TONE AND SYSTEM THEREOF**

(30) Priority: 25.08.2008 CN 200810213661
(71) Applicant: Huawei Technologies Co., Ltd., Longgang District, Shenzhen Guangdong 518129 (CN)
(72) Inventor: YANG, Jian c/o Huawei Technologies Co.Ltd., Int.Prop.Dept., Shenzhen (CN); CHEN, Guoqiao c/o Huawei Technologies Co.Ltd., Int.Prop.Dept., Shenzhen (CN); WANG, Lei c/o Huawei Technologies Co.Ltd., Int.Prop.Dept., Shenzhen (CN); GAO, Wenmei c/o Huawei Technologies Co.Ltd., Int.Prop.Dept., Shenzhen (CN); ZHANG, Huiping c/o Huawei Technologies Co.Ltd., Int.Prop.Dept., Shenzhen (CN)
(74) Representative: Kreuz, Georg Maria
(86) International application number: PCT/CN2009/073491
(87) International publication number: WO 2010/022648

(57) **Abstract**

A method, an apparatus, and a system for playing Multimedia Ring Back Tones (MRBTs) are disclosed. The method includes: generating MRBT play information or rules according to presence information of a user; generating MRBT play data according to the MRBT play information or rules; and sending the MRBT play data to a User Equipment (UE) for playing. The apparatus for playing MRBTs provides MRBT services for the calling UE and the called UE respectively, enables customization, and plays the MRBT service according to conditions.

## Description

This application claims priority to Chinese Patent Application No. 200810213661.7, filed with the Chinese Patent Office on August 25, 2008 and entitled "Method, Apparatus and System for Playing Multimedia Ring Back Tones", which is incorporated herein by reference in its entirety.

### Field of the Invention

The present invention relates to radio communications technologies, and in particular, to a technology for playing Customized Ring Back Tones (CRBTs), and more particularly, to a method, an apparatus, and a system for playing Multimedia Ring Back Tones (MRBTs).

### Background of the Invention

An MRBT service is customized by the called user in the videophone service, and provides a colorful and euphonic multimedia video for the calling user in place of the ordinary ring back tone while the called User Equipment (UE) rings after the calling party originates a call to the called party through a videophone. The MRBT service includes CRBT, Customized Ring Tone (CRT), and Customized Background Tone (CBT).

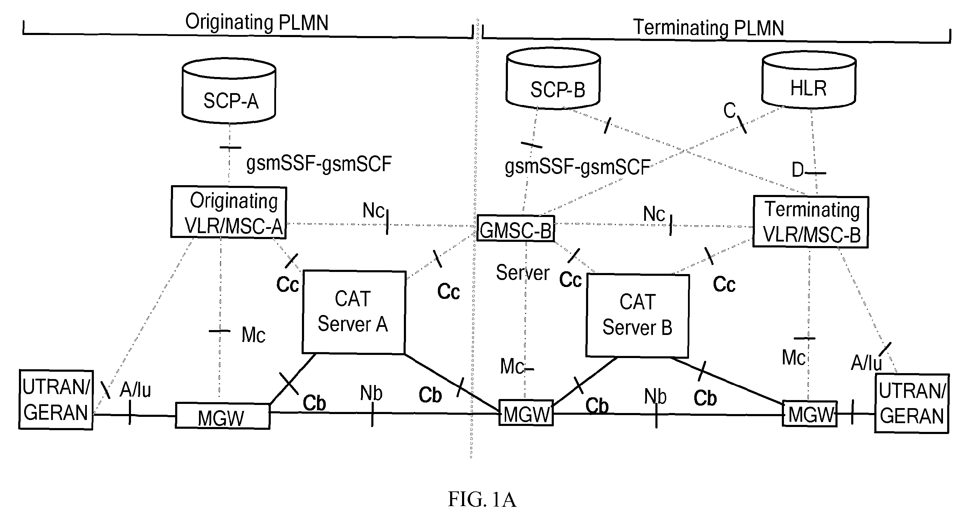

Currently, the videophone based on a 3^{rd} Generation Partnership Project (3GPP) system is implemented through a Circuit Switched (CS) network, and is based on the 324M technology. The CRBT service implemented through a CS network is known as a CS-domain MRBT service. FIG. 1A shows a logical structure for implementing an MRBT service through a CS videophone. The functions of network elements are described below:
The Mobile Switching Center (MSC) server is a functional entity for controlling the calls that involve the mobile UEs located in the area governed by the MSC server.
The Media Gateway (MGW) is connected to the MSC server, and is configured to perform call interactions under the control of the MSC server.
The Visitor Location Register (VLR) is a database of information to be retrieved for call connections of a UE in the area governed by the MSC server. The VLR stores data related to call processing, for example, parameters such as the user number, identification code of the area, and the services provided for the user. The VLR is generally integrated with the MSC server into one network element, for example, the originating VLR/MSC-A and terminating VLR/MSC-A in FIG. 1A.
The Radio Network Controller (RNC) is a functional entity for connection setup and release, handover, macro diversity combination, and radio network resource management.
The NodeB is a base station in the Wideband Code Division Multiple Access (WCDMA) standard. It supports the Frequency Division Duplex (FDD) mode, the Time Division Duplex (TDD) mode, or both of them, and includes one or more cells. The RNC and the NodeB mentioned above refer to the Universal Mobile Telecommunications System (UMTS) Terrestrial Radio Access Network (UTRAN) part in the UMTS. In FIG. 1A, the RNC and the NodeB are combined into a UTRAN or a GSM/EDGE Radio Access Network (GERAN).
The Home Location Register (HLR) is a database used by an operator's management department for managing mobile users. Each of the mobile users should register with its HLR.
The Authentication Center (AUC) is a functional entity for authenticating the identity of a mobile user and generating the corresponding authentication parameters. The AUC is generally integrated with the HLR, and is not illustrated in FIG. 1A.
The Media Play Server receives digits dialed on a 3G videophone. By dialing different digits or pressing keys to make selection after dialing, the user can access different program contents. The system has certain storage capacity and can manage relevant program contents.
The MRBT server is a system that provides MRBTs for videophone users. It stores, plays and manages MRBTs, and supports the Bearer Independent Call Control (BICC) or Integrated Services Digital Network User Part/ISDN User Part (ISUP) protocol. After the called user applies for the MRBT service, the MRBT server is capable of playing MRBTs to the calling UE, and stopping the play automatically when the called user answers the call. In FIG. 1A, the Media Play Server is integrated with the MRBT server into one logical network element, namely, a Customized Alerting Tone (CAT) server.
The Signaling Control Point (SCP) controls and triggers the CRBT service.

Currently, the CRBT service can be implemented through an IP Multimedia Subsystem (IMS) solution. The IMS is defined by the 3GPP Release 5 (R5) to implement next-generation multimedia telecom services such as voice, video and data.

The IMS was put forward by the 3GPP organization in the mobile communication field. It is a new network technology intended to meet the requirements of new wideband multimedia services. The IMS is incorporated into the 3GPP R5 standard, and is perfected in the 3GPP R6 and 3GPP R7.

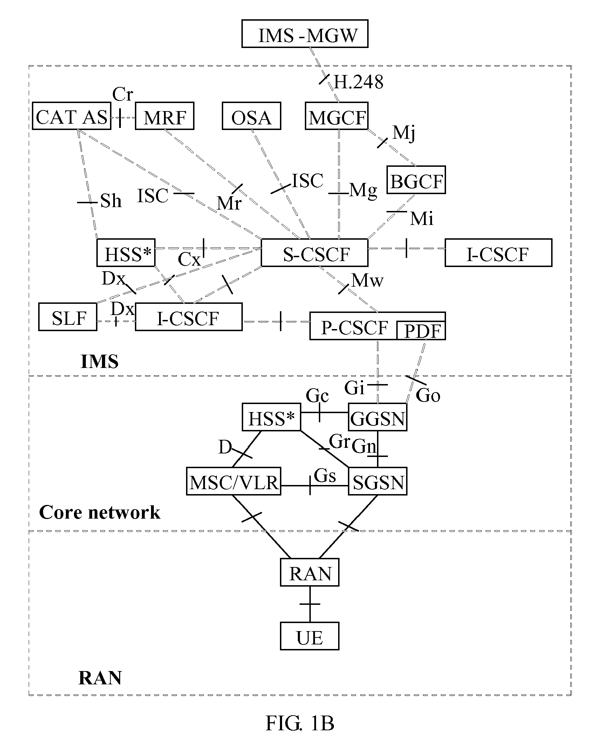

FIG. 1B shows a logical structure for implementing a CRBT service in the IMS of the 3GPP.

The functional entities in the 3GPP IMS are described below:
The Call Session Control Function (CSCF) controls the session process. The CSCF is categorized into: Proxy CSCF (P-CSCF), Interrogating CSCF (I-CSCF), and Serving CSCF (S-CSCF). The P-CSCF is the first contact point of the user in the IMS network, and is responsible for authenticating a request, and processing and forwarding a response. The P-CSCF is capable of managing security and hiding differences between access networks. In R5, the P-CSCF further includes a Policy Decision Function (PDF) for authorizing and managing resources. The I-CSCF is an interface between multiple IMS network domains, and is responsible for querying for user information and searching for the S-CSCF of the user. The I-CSCF is configured to hide the internal topology of the network, and balance the load and control the traffic. The S-CSCF acts as a control core in the IMS, and is a linchpin of the IMS multi-process control. The S-CSCF is responsible for recording and controlling the user process state, executing the session routing function, interacting with an Application Server (AS) and the charging function, and triggering routing of value-added services and exercising service control according to rules.
The Home Subscriber Server (HSS) is a database for storing user data and service data, and is an upgraded HLR. The HSS records the user identity, registration information, access parameters and service triggering information through Extensible Markup Language (XML) files.
The Multimedia Resource Function (MRF) includes a control part (namely, a Multimedia Resource Function Controller (MRFC)) and a user-plane processing part (namely, a Multimedia Resource Function Processor (MRFP)). The MRF supports the bearer-related application services such as video conference and user bulletin. The MRF combines data media streams, distributes media streams, converts bearer codes, and sends charging information.
The IMS-Media Gateway (IMS-MGW) and Media Gateway Control Function (MGCF) are gateways between the IMS and the traditional CS network, for example, between the IMS and the Public Switched Telephone Network (PSTN), so that the users of the two networks can communicate. The IMS-MGW and the MGCF can convert the CS network signaling into Session Initiation Protocol (SIP) signaling, and vice versa; and the IMS-MGW and the MGCF can report the charging information.
The Breakout Gateway Control Function (BGCF) is also a functional entity related to the traditional CS network. The BGCF controls the gateway to convert signaling, and selects the MGCF through which the call arrives at the CS network. However, if another network is selected as a path of the call, the session is forwarded to the BGCF of the selected network.
The AS does not completely belong to the IMS. It is a functional entity built on the IMS, and can make full use of functions provided by the IMS, for example, call control, account management, and charging. The AS provides value-added multimedia services for the outside. The IMS-based AS can provide many unique functions, for example, presence, messaging, and conferencing.

In this document, the AS refers to an application server that provides the MRBT function. In FIG. 1B, the AS is a CAT AS.

The existing UE carries out the CRBT service in this way: The user originates a call, and the MSC server judges whether the called user has subscribed to the relevant CRBT service through the procedure of the core network; if the called user has subscribed to the CRBT service, the MSC server sends an Initial Address Message (IAM) to the MRBT server to activate the relevant CRBT service while originating a call to the called party.

Before the called UE answers the call, the MRBT server sets up a CRBT session with the calling UE, and sends the CRBT content to the calling UE through an early media channel.

In the prior art described above such as the CRBT technology and CRT technology, the service state of the user is judged according to the subscription relation without considering whether the service is carried out in a proper scenario.

The inventor finds at least these problems in the prior art: The CRBT service in the prior art relies solely on the service subscription without considering other parameters or information, and is incapable of enabling the customization function.

### Summary of the Invention

In view of the foregoing problems in the prior art, the embodiments of the present invention provide a method, an apparatus, and a system for playing MRBTs according to conditions.

A method for playing MRBTs is provided in an embodiment of the present invention. The method includes: generating MRBT play information or rules according to presence information of a user; generating MRBT play data according to the MRBT play information or rules; and sending the MRBT play data to a UE for playing.

Another method for playing MRBTs is provided in an embodiment of the present invention. The method includes: receiving presence information sent from a UE; generating MRBT play information or rules according to the received presence information; storing mapping relations between the generated MRBT play information or rules and the UE; searching for the MRBT play information or rules related to UEs among the stored mapping relations according to a call request; generating MRBT play data of a calling UE and MRBT play data of a called UE according to the found MRBT play information or rules; and sending the generated MRBT play data to a corresponding UE for playing.

An apparatus for playing MRBTs is provided in an embodiment of the present invention. The apparatus includes: an information generating unit, configured to generate MRBT play information or rules according to presence information of a user; a play data generating unit, configured to generate MRBT play data according to the MRBT play information or rules; and a play data sending unit, configured to send the MRBT play data to a UE for playing.

Another apparatus for playing MRBTs is provided in an embodiment of the present invention. The apparatus includes: an information receiving unit, configured to receive presence information sent from a UE; a play information or rule generating unit, configured to generate MRBT play information or rules according to the received presence information; a storing unit, configured to store mapping relations between the generated MRBT play information or rules and the UE; a searching unit, configured to search for the MRBT play information or rules related to UEs among the stored mapping relations according to a call request; a play data generating unit, configured to generate MRBT play data of a calling UE and MRBT play data of a called UE according to the found MRBT play information or rules; and an outputting unit, configured to send the generated MRBT play data to a corresponding UE for playing.

A system for playing MRBTs is provided in an embodiment of the present invention. The system includes an apparatus for playing MRBTs and UE. The UE generates presence information and sends the generated presence information to the apparatus for playing MRBTs. The presence information includes: CRBT enabling setting data, CRBT capability setting data, UE location data, UE state setting data, and blacklist setting data. The apparatus for playing MRBTs receives the presence information, generates MRBT play information or rules according to the presence information, stores mapping relations between the generated MRBT play information or rules and the UE, searches for the MRBT play information or rules related to UEs among the stored mapping relations according to a call request, generates MRBT play data of a calling UE and MRBT play data of a called UE according to the found MRBT play information or rules, and sends the generated MRBT play data to a corresponding UE for playing.

Another method for playing MRBTs is provided in an embodiment of the present invention. The method includes: by a UE, generating MRBT play information or rules according to presence information of a user; generating MRBT play data according to the MRBT play information or rules; and playing the MRBT play data.

A UE is provided in an embodiment of the present invention. The UE includes: an information generating unit, configured to generate MRBT play information or rules according to presence information of a user; a play data generating unit, configured to generate MRBT play data according to the MRBT play information or rules; and a MRBT playing unit, configured to play the MRBT play data.

The embodiments of the present invention bring at least the following benefits: The apparatus for playing MRBTs provides MRBT services for the calling UE and the called UE respectively, enables customization, and plays the MRBT service according to conditions.

### Brief Description of the Drawings

To make the technical solution under the present invention or in the prior art clearer, the following outlines the accompanying drawings involved in the description of the embodiments of the present invention or the prior art. Apparently, the accompanying drawings outlined below are exemplary only and are not exhaustive, and persons of ordinary skill in the art can derive other drawings from such accompanying drawings without any creative effort.
FIG. 1A shows a network architecture for implementing a CS-domain MRBT service in the prior art;
FIG. 1B shows a logical structure for implementing a CRBT service in the IMS of the 3GPP in the prior art;
FIG. 2A shows a structure of an apparatus for playing MRBTs in a preferred embodiment of the present invention;
FIG. 2B is a flowchart of a method for playing MRBTs in a preferred embodiment of the present invention;
FIG. 3 is a block diagram of playing an MRBT service conditionally through a server according to a first embodiment of the present invention;
FIG. 4 is a signaling flowchart of implementing a videophone MRBT service in the CS mode according to the first embodiment of the present invention;
FIG. 5 is a block diagram of playing an MRBT service conditionally through a server according to a second embodiment of the present invention;
FIG. 6 is a signaling flowchart of implementing a videophone MRBT service in the CS mode according to the second embodiment of the present invention;
FIG. 7 is a block diagram of playing an MRBT service conditionally through a server according to a third embodiment of the present invention;
FIG. 8 is a signaling flowchart of implementing a videophone MRBT service in the IMS mode according to the third embodiment of the present invention; and
FIG. 9 is a signaling flowchart of implementing a videophone MRBT service in the IMS mode according to the third embodiment of the present invention.

### Detailed Description of the Embodiments

To make the objectives and merits of the technical solution under the present invention clearer, the following describes the embodiments of the present invention in more detail with reference to accompanying drawings. The exemplary embodiments of the present invention and the description about them are illustrative in nature, and shall not be construed as limitations to the present invention. The MRBT service mentioned herein includes CRBT service, CRT service, and CBT service.

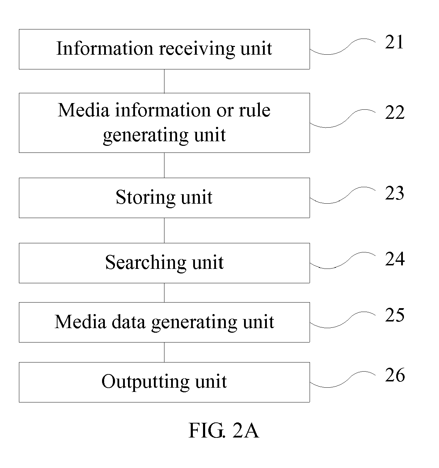

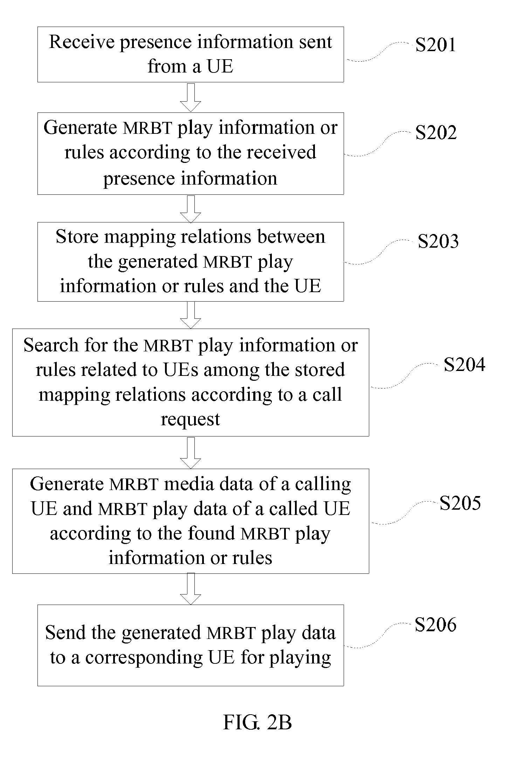

FIG. 2A shows a structure of an apparatus for playing MRBTs in a preferred embodiment of the present invention; and FIG. 2B is a flowchart of a method for playing MRBTs in a preferred embodiment of the present invention. The following expounds the apparatus and method for playing MRBTs in a preferred embodiment of the present invention with reference to FIG. 2A and FIG. 2B.

As shown in FIG. 2A, the apparatus for playing MRBTs includes: an information receiving unit 21, configured to receive presence information (MRBT service setting information) sent from a UE; a play information or rule generating unit 22, configured to generate MRBT play information or rules according to the received presence information; a storing unit 23, configured to store mapping relations between the generated MRBT play information or rules and the UE; a searching unit 24, configured to search for the MRBT play information or rules related to UEs among the stored mapping relations according to a call request; a play data generating unit 25, configured to generate MRBT play data of a calling UE and MRBT play data of a called UE according to the found MRBT play information or rules; and an outputting unit 26, configured to send the generated MRBT play data to a corresponding UE for playing.

The presence information includes: CRBT enabling setting data, CRBT capability setting data, UE location data, UE state setting data, or blacklist setting data, or any combination thereof.

The information receiving unit 21 receives presence information sent from the calling UE and presence information sent from the called UE.

The play information or rule generating unit 22 generates CRBT play information or rules, CRT play information or rules, or CBT play information or rules according to the presence information.

The play data generating unit 25 generates CRBT play data or CBT play data for the calling UE, and generates CRT play data or CBT play data for the called UE.

The outputting unit 26 sends the generated CRBT play data or CBT play data to the calling UE for playing; and sends the generated CRT play data or CBT play data to the called UE for playing.

Taking the process of generating CRBT play information or rules as an example, the play information or rule generating unit 22 generates the CRBT play information or rules for the calling UE according to the presence information sent from the calling UE and/or the presence information sent from the called UE. The CRBT play information or rules for the calling UE may be generated according to the presence information sent from the calling UE or the presence information sent from the called UE, depending on which one of the presence information sent from the calling UE and the presence information sent from the called UE has a higher priority; or according to the presence information sent from the calling UE; or according to the presence information sent from the called UE.

As shown in FIG. 2B, a method for playing MRBTs according to an preferred embodiment of the present invention includes the following steps:
S201. Receive presence information sent from a UE.
S202. Generate MRBT play information or rules according to the received presence information.
S203. Store mapping relations between the generated MRBT play information or rules and the UE.
S204. Search for the MRBT play information or rules related to UEs among the stored mapping relations according to a call request.
S205. Generate MRBT play data of a calling UE and MRBT play data of a called UE according to the found MRBT play information or rules.
S206. Send the generated MRBT play data to a corresponding UE for playing.

In this way, the CRBT and the CRT set by the user can be sent to the calling party and the called party respectively at the same time.

### Embodiment 1

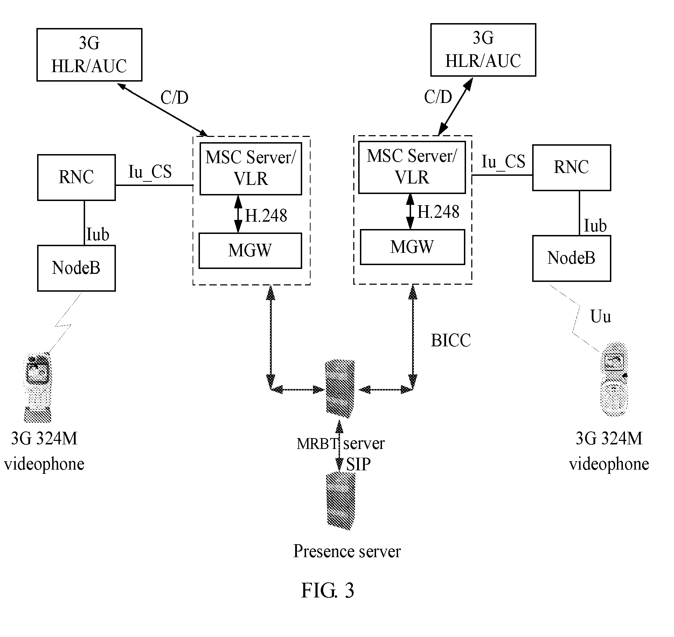

FIG. 3 is a block diagram of playing an MRBT service conditionally through a server according to the first embodiment of the present invention. In the first embodiment, the CRBT service is implemented through a CS videophone in spanning network architecture.

As shown in FIG. 3, in the whole network architecture, the MRBT server is connected to the presence server. The protocol between them may be the BICC protocol in the core network, or the SIP protocol. In the first embodiment, the SIP protocol applies. The principles of the BICC protocol are similar.

The videophone terminal applied in the first embodiment is a mobile UE such as a mobile phone. The message interaction between the CS-based mobile UE and the presence server may be set on the UE locally through an "environment setting" function on the UE, for example, states such as outdoor, conference, do-not-disturb, or offline. The UE defines the ring tone, keypad tone, and screen brightness according to each state set by the user. Meanwhile, the CRBT setting state may be incorporated into such states.

For example, in the conference state, the UE setting does not allow the CRT, and the process of setting up the CRBT type not suitable for the conference occasion is cancelled.

The UE setting state may be carried through the Short Message Service (SMS) or Unstructured Supplementary Service Data (USSD) and sent from the UE to the server so that the state information can be stored in the presence server and applied in the subsequent process of the CRBT service.

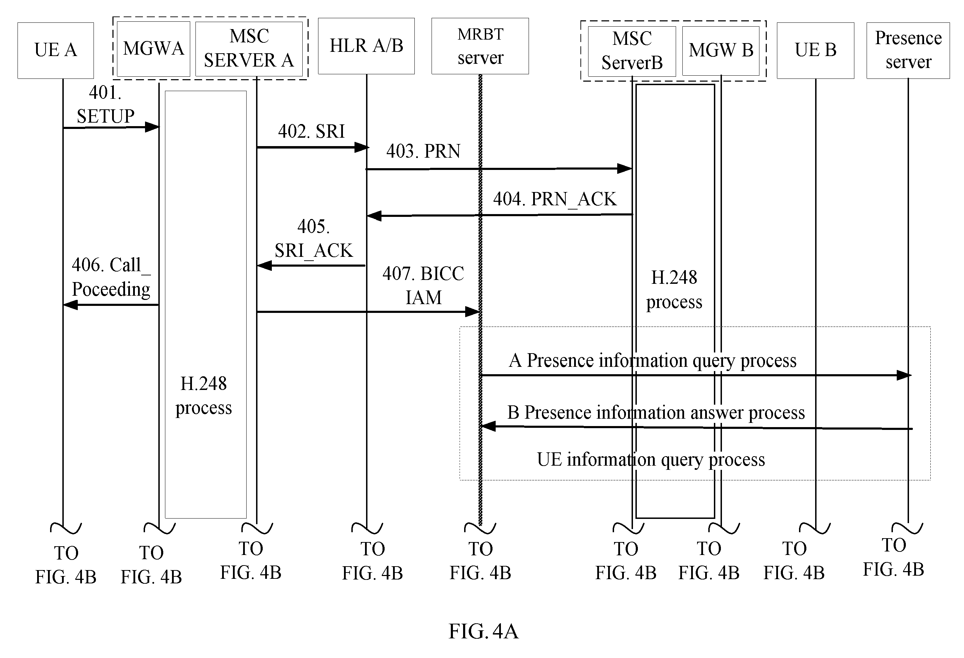

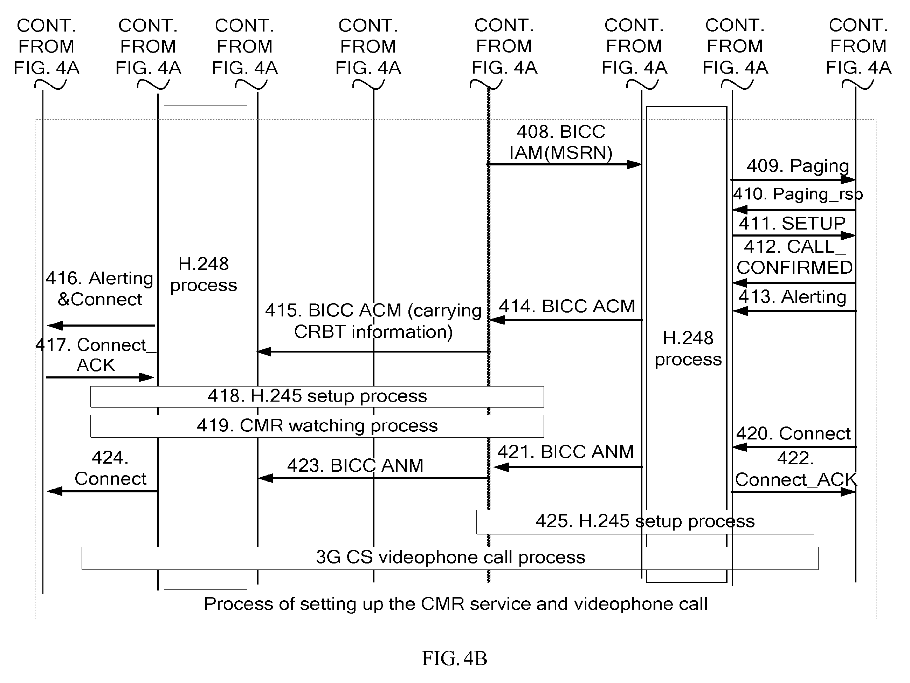

FIG. 4 is a signaling flowchart of implementing a videophone MRBT service in the CS mode according to the first embodiment of the present invention. The signaling flowchart is detailed below:
401. UE A sends a SETUP message to MSC server A. In the information element "BC_IE" in the message, the ITC is "UDI", and the ORA is "H.223&H.245".
402. MSC server A sends a Send Roaming Information (SRI) request to HLR B.
403. HLR B sends a Provide Roaming Number (PRN) message to MSC server B to which the called party is attached, with a view to obtaining the roaming number.
404. MSC server B sends a PRN_ACK that carries the roaming number to HLR B. If MSC server B supports pre-paging, a pre-paging process is initiated first, and then the roaming number is returned.
405. HLR B sends an SRI_ACK message to MSC server A. The message carries the route information of UE B and information indicating whether the called user has customized the MRBT service.
406. MSC server A obtains a Mobile Station Roaming Number (MSRN) of the called party, and then initiates Call_Proceeding to the calling UE.
407. MSC server A sends an ISUP IAM message to the MRBT server. If the called user has subscribed to a Calling Line Identification Presentation (CLIP) service, the Bearer Independent Call Control Initial Address Message (BICC IAM) needs to carry the calling number and the service prefix information.
   The MSC server controls the MGW through the H.248 protocol.
   A. The MRBT server initiates a query process to the presence server to query for UE-related presence information such as the user state (conference state or outdoor state), CRBT preferred by the user, or even user location information. Such information is configured on the UE outside this call. The configuration method has been described above. In the CS mode, the information may be configured through SMS or USSD. By retrieving such information, the MRBT server judges whether to send a CRBT to the user and which type of CRBT needs to be sent according to the local CRBT service subscription state of the user.
   B. The presence server returns the required presence information according to the query request from the MRBT server.
408. The MRBT server sends an ISUP IAM message to MSC server B. If the called user has subscribed to the CLIP service, the ISUP IAM message needs to carry the calling number.
409. If no pre-paging is initiated at the time of retrieving the roaming number, MSC server B sends a paging request message to UE B.
410. UE B returns a paging response message.
411. MSC server B sends a SETUP message to UE B. In the information element "BC_IE" in the message, the ITC is "UDI", and the ORA is "H.223&H.245".
412. UE B returns a CALL CONFIRMED message, which carries no new BC_IE and indicates support of the called party of a Video Phone (VP) service.
413. After the called UE rings, UE B returns an ALERTING message to MSC server B.
414. MSC server B sends an Audio Compression Manager (ACM) message to the MRBT server.
415. After receiving the ACM message from MSC server B, the MRBT server sends an ACM message that carries the CRBT information to MSC server A.
416. MSC server A identifies the CRBT information, and sends an Alerting message and a Connect message to UE A.
417. After receiving the Connect message, UE A sends a Connect ACK message to MSC server A.
418. An H.245 session is set up between UE A and the MRBT server.
419. UE A receives the video CRBT through the MRBT server. The content of the CRBT depends on the previous presence information and the CRBT service subscription information of the user.
420. After going off-hook, UE B sends a Connect message to MSC server B.
421. MSC server B sends an Answer Message (ANM) to the MRBT server.
422. MSC server B sends a Connect ACK message to UE B.
423. The MRBT server sends an ANM message to MSC server A, whereupon MSC server A starts charging.
424. MSC server A sends a Connect signaling message to UE A. (Or, MSC server A does not send a Connect signaling message to UE A, or UE A does not process the Connect message. This step is optional.)
425. An H.245 session is set up between UE B and the MRBT server, and a video call begins between UE A and UE B.

In the first embodiment, the user state information may be queried for, from the presence server through the MRBT server, and may also be queried for at the user profile data stored in the MRBT server. The profile data includes the time segment set by the user, namely, which type of CRBT is played in a specific time segment, which time segment allows play of the CRBT, and which time segment does not allow play of the CRBT; and includes the user preference, white list and blacklist.

Meanwhile, the service may be provided in the profile mode in a presence query process.

Signaling A may be a SIP Subscribe signaling message. Signaling B may be a SIP Notify signaling message. After receiving the Subscribe signaling message, the presence server notifies the user's presence information to the UE directly through the Notify signaling message. In FIG. 4, this process is included in the UE information query process. Further, the presence information may be extended to include the UE capability information, namely, information about whether the UE supports an MRBT, and the supported type of MRBT. In this way, when the UE carries out the videophone service, no extended field indicative of the supported MRBT capability or type needs to be carried, but the supported MRBT capability or type is judged according to the presence information directly. Therefore, the requirements on the UE are lowered, and the UE can be more compatible with videophone calls without MRBT service.

In the MRBT setup process described below, it is assumed that the calling party hears the CRBT. In the case that the called party hears the CRT, the method is also applicable.

### Embodiment 2

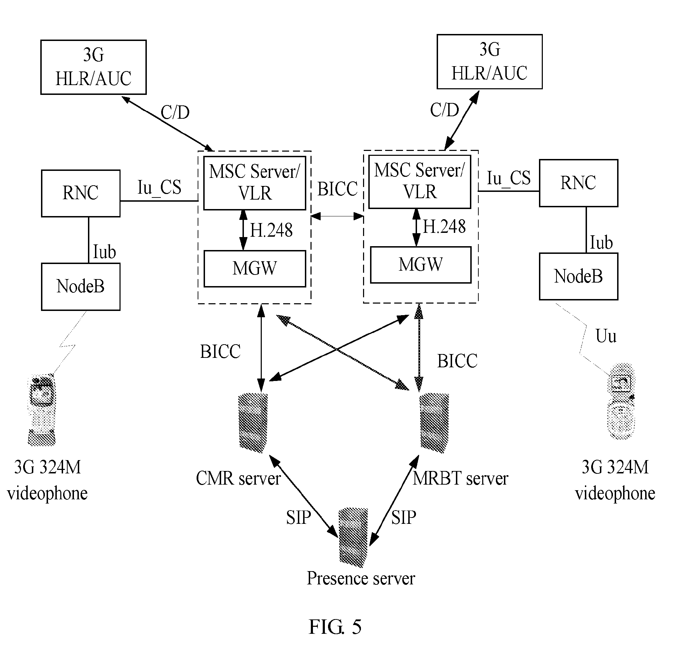

FIG. 5 is a block diagram of playing an MRBT service conditionally through a server according to the second embodiment of the present invention. In the second embodiment, the CRBT service is implemented through a CS videophone in a non-spanning network architecture.

In the whole network architecture, the MRBT server is connected to the presence server. The protocol between them may be the BICC protocol in the core network, or the SIP protocol. In the second embodiment, the SIP protocol applies. The principles of the BICC protocol are similar.

This solution is similar to the foregoing spanning solution except that the location of the MRBT server differs. In the call process, the MRBT server in this solution does not undertake the connection of the videophone call as usual.

The mode of setting the presence information is the same as that described in the first embodiment. That is, the UE can transmit the user state information, UE capability information, and optionally, UAProf information to the presence server through SMS, USSD, or SIP by means of outband signaling of the videophone. The user state information is the environment state such as outdoor, conference, or offline. Moreover, such information is used for implementing services in the videophone MRBT service process.

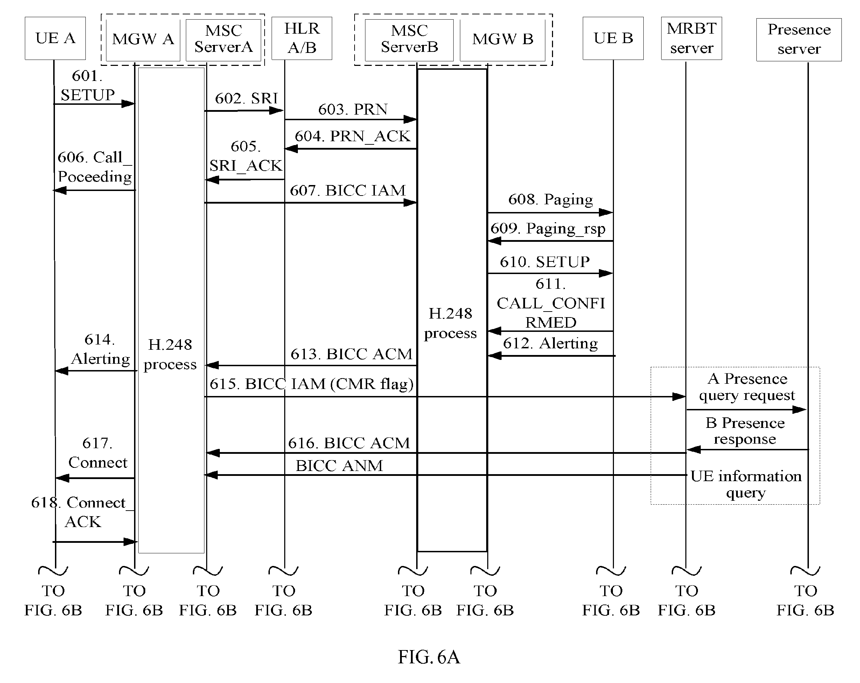

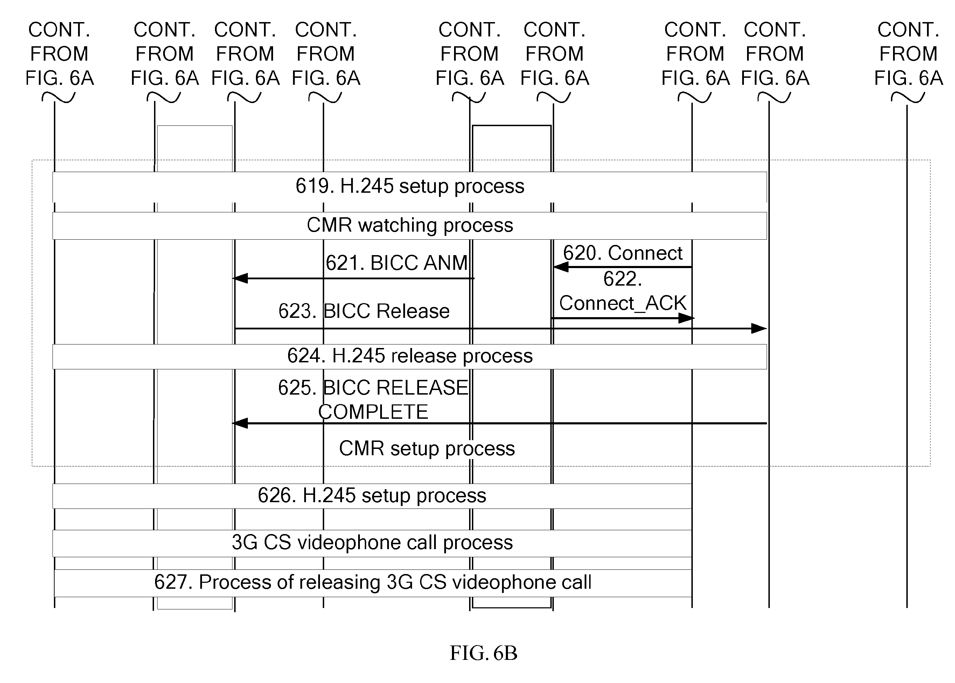

FIG. 6 is a signaling flowchart of implementing a videophone MRBT service in the CS mode according to the second embodiment of the present invention. The signaling flowchart is detailed below:
601. UE A sends a SETUP message to MSC server A. In the information element "BC_IE" in the message, the ITC is "UDI", and the ORA is "H.223&H.245".
602. MSC server A sends an SRI request to HLR B.
603. HLR B retrieves a roaming number from MSC server B to which the called UE is attached.
604. MSC server B returns the roaming number to HLR B. If MSC server B supports pre-paging, a pre-paging process is initiated first, and then the roaming number is returned.
605. HLR B returns a message to MSC server A. The message carries the route information of UE B and information indicating whether the called user has customized the MRBT service.
606. MSC server A obtains an MSRN of the called party, and then initiates Call_Proceeding to the calling UE.
607. MSC server A sends an ISUP IAM message to MSC server B. If the called user has subscribed to the CLIP service, the ISUP IAM message needs to carry the calling number.
608. If no pre-paging is initiated at the time of retrieving the roaming number, MSC server B sends a paging request message to UE B.
609. UE B returns a paging response message.
610. MSC server B sends a SETUP message to UE B. In the information element "BC_IE" in the message, the ITC is "UDI", and the ORA is "H.223&H.245".
611. UE B returns a CALL CONFIRMED message, which carries no new BC_IE and indicates support of the called party of the VP service.
612. After the called UE rings, UE B returns an ALERTING message to MSC server B.
613. MSC server B returns a BICC ACM message to MSC server A.
614. MSC server A returns an ALERTING message to UE A.
615. MSC server A sends a BICC IAM message to the MRBT server. The message carries information indicating whether the called party has customized the MRBT service.
   The MSC server controls the MGW through the H.248 protocol.
   A. Similarly to the first embodiment, the MRBT server queries for the presence server about the user state information such as location information, preference information, and state information, and UE capability information if necessary. The MRBT server judges whether the UE is capable of carrying out the MRBT service according to the UE capability information.
   B. The presence server returns the query result required by the MRBT server. The MRBT server decides how to carry out the MRBT service according to the query result and the user subscription information.
616. The MRBT server returns a BICC ACM message to MSC server A. MSC server A identifies the ACM message sent by the MRBT server, and sends no Alerting message to the calling UE.
617. After receiving the ANM message from the MRBT server, MSC server A sends a CONNECT signaling message to the calling UE A, and monitors whether any message is returned by MSC server B.
618. UE A returns a CONNECT ACK message to MSC server A.
619. An H.245 session is set up between UE A and the MRBT server. After the setup, the calling user can view the MRBT information played by the MRBT server.
620. The called UE B sends a CONNECT message as a response.
621. MSC server B returns a BICC ANM message to MSC server A.
622. MSC server B returns a CONNECT ACK message to the called UE.
623. MSC server A sends a BICC Release message to the MRBT server, instructing the MRBT server to release the H.245 session between the MRBT server and the calling UE A.
624. The H.245 session is released between the calling UE A and the MRBT server.
625. After the H.245 session is released, the MRBT server returns a BICC Release Complete message to MSC server A.
626. An H.245 session is set up between the calling UE A and the called UE B.
627. After the videophone call is completed, the H.245 session and the lower-layer circuit bearer process are released between the calling UE A and the called UE B.
In step A of the second embodiment above, the Subscribe message is sent by the MRBT server to the presence server to query the presence information of the user; and the presence server returns a Notify message that carries the presence information. The foregoing message may carry the presence information of the user and the UE capability information as a basis for deciding how to set up the CRBT service.

In the MRBT setup process in the second embodiment described below, it is assumed that the calling party hears the CRBT. In the case that the called party hears the CRT, the method is also applicable.

### Embodiment 3

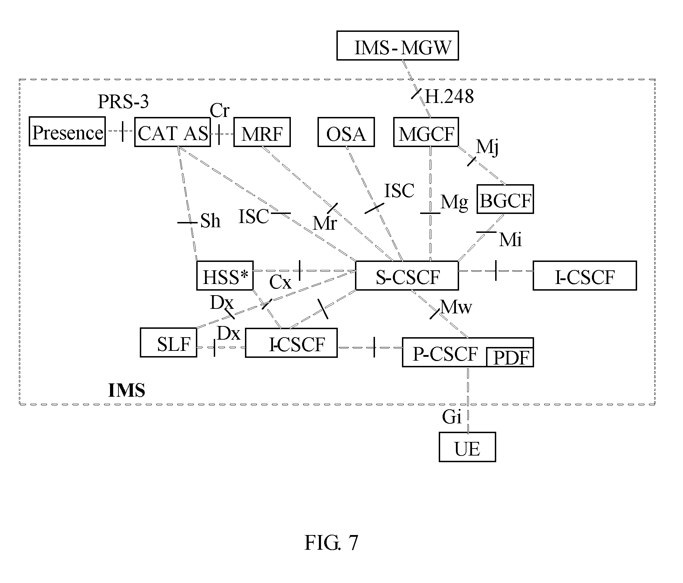

FIG. 7 is a block diagram of playing an MRBT service conditionally through a server according to the third embodiment of the present invention. In the third embodiment, the CRBT service is implemented through IMS videophone and early media.

As shown in FIG. 7, in the whole network architecture, the MRBT AS is connected to the presence server and communicates with the presence server by means of the SIP protocol through a PRS-3 interface defined by the presence server.

In the presence service, the network elements and entities involved in the communication are sorted into three types. One type is "source", namely, a network element that provides the entire presence information, which is known as a UE here. In a SIP network, the presence information is sent to the presence AS through Publish.

The other type is a presence server, namely, an AS, which is designed to collect the presence information of the served object so that the presence information is available to the user who requires it.

Another type is called "watcher", namely, the user who receives or requests the presence information. The user sends a presence information request to the presence AS through Subscribe signaling. The presence AS sends a Notify message that carries the presence information to the watcher.

The foregoing framework is universally applicable in the whole IMS, and complies with the SIMPLE rule defined by the Open Mobile Alliance (OMA).

The UE, especially, the UE capable of IMS MRBTs, reports its presence information according to the presence procedure if the UE supports the presence function.

In the process of carrying out the service, the MRBT server needs to define the interface connected to the presence server. Here it is assumed that the interface is a PRS-3 interface. Meanwhile, the following defines the procedure for interacting with the presence server.

The presence information includes a flag of the CRBT service type supported by the UE. When the UE performs the MRBT service, the AS may query for the presence information to select the call procedure. For example, the UE sends the presence information which indicates support of the early media or the forking mode. In this way, the UE does not need to change the call signaling different from the videophone in the session initiation process.

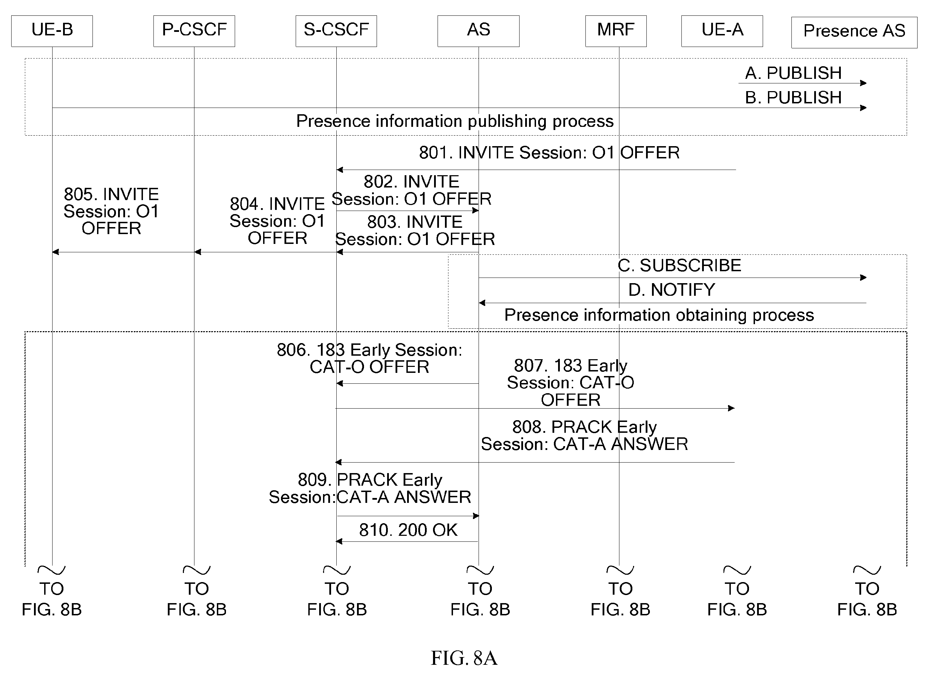

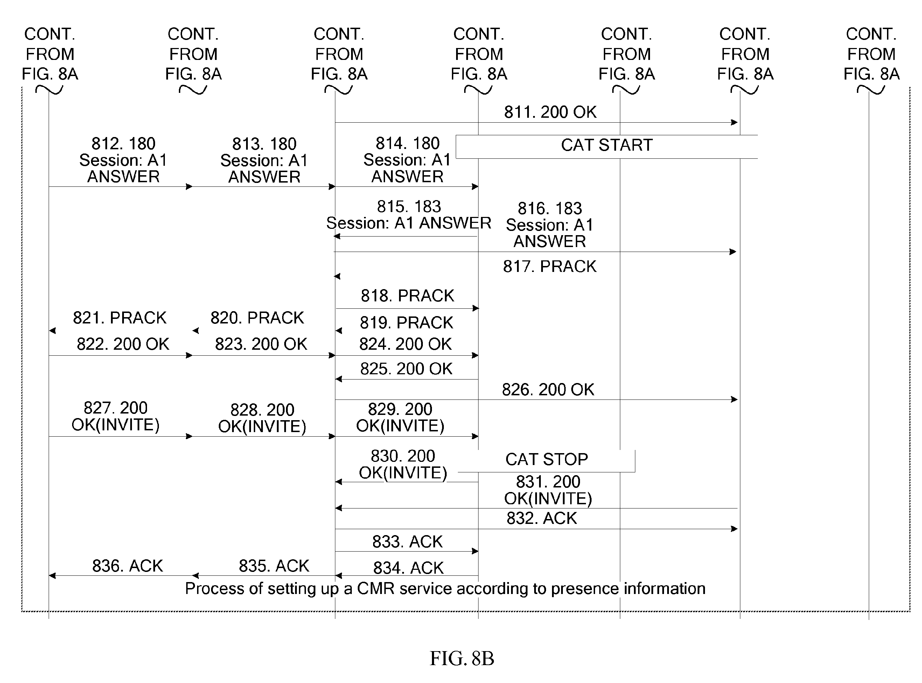

FIG. 8 is a signaling flowchart of implementing a videophone MRBT service in IMS mode according to the third embodiment of the present invention. The signaling flowchart is detailed below:
A. UE-A sends UE presence information related to UE-A to the presence server through a Publish method of the SIP signaling. The presence information may carry the user state information, UE capability information, and service information. For example, the information indicates whether the UE supports the MRBT service, and supports which type of MRBT service.
B. UE-B applies the Publish method of the SIP signaling, and the reporting mode and the content are the same as those in step A. It should be noted that the whole presence reporting process is not a focus of the CRBT service, and is regarded as an outband process of this solution.
   801-802. UE-A sends an Invite request to UE-B, requesting to set up a call between them. The request carries a Session Description Protocol (SDP) OFFER (O1) The Invite request is routed to the corresponding AS according to the initial Filter Criteria (iFC) in the S-CSCF. In the SIP Invite request sent by UE-A, a Supported header field needs to include the option tag of the early-session.
   803-805. The AS sends the Invite request that carries the SDP OFFER (O1 to UE-B.
C. After receiving the Invite request, the AS needs to initiate a query process to the presence server to query UE-related presence information such as the user state (whether the CRBT service is enabled, and whether the play needs to be customized), CRBT preferred by the user, or even user location information. By querying for such information, the AS can obtain the user state information, UE service information, and UE capability information. After such information is queried for, the AS can perform the following work. First, the AS decides whether to carry out the CRBT service; second, if the CRBT service needs to be carried out, the AS decides the type of CRBT service to be carried out; third, after it is determined that the CRBT service needs to be carried out, the AS selects a proper solution, for example, forking mode or early media mode; finally, the AS provides the CRBT service in the call process. Besides, if the user has set the rules of playing the CRBT service according to the presence information, for example, playing the CRBT service according to the user state or user location information, or even the user has selected the CRBT content, the AS service needs to control the MRF according to the found presence information to carry out the CRBT service correctly.
D. The presence server returns the required presence information according to the query request from the MRBT server.
   806-811. The AS checks whether UE-B has subscribed to the MRBT service, and requests media resources from the MRFP. The AS checks whether UE-A supports early media, and sends a SIP 183 response of an early session to UE-A. The early session includes an SDP OFFER (CAT-O). The OFFER helps to set up a CAT media path between the MRFP and UE-A. UE-A sends a Provisional Reliable Acknowledgement (PRACK) message as an acknowledgment to the SIP 183 response. The PRACK message carries an SDP Answer (CAT-A). The AS plays content of the CAT media to UE-A. Depending on the operation policy, steps 6-11 may be performed after step 2 and before the Invite request is forwarded to UE-B.
   812-814. UE-B sends a SIP 180 response that carries the SDP Answer (A1). The response arrives at the AS first.
   815-816. After receiving the "180 Ringing" response sent by UE-B, the AS modifies the response to "183 Session Progress", adds the original SDP Answer (A1) to this response, and forwards the response to UE-A.
   817-826. UE-A returns a PRACK message.
   827-836. UE-B answers this call. UE-B sends a 200 OK response to the AS, and the AS stops sending CAT media to UE-A through the early media session.

In the third embodiment, the process includes three steps:
Step 1: Presence information reporting process: The third embodiment briefly describes how the information is reported to the server, but this reporting process is an outband process not related to the CRBT service.
Step 2: The AS queries the presence server for the presence information of the user or UE. Such information serves as a basis for deciding whether to carry out the CRBT service, which type of CRBT service needs to be carried out, the procedure for carrying out the CRBT service, and the CRBT content and mode to be selected in the CRBT service process.
Step 3: This step is a process of setting up the CRBT service and call. This process is the detailed implementation of the CRBT service. In the third embodiment, it is assumed that the CRBT service is set up through early media. The present invention is not limited to that, namely, not limited to the mode of sending a ring back tone to the calling UE. In an alternative solution, a CRT may be sent to the called UE.

Through the third embodiment, the CRBT service can make full use of the presence information in the service implementation process, and provide more personalized MRBT services. Meanwhile, the CRBT service can be integrated with the existing IMS videophone call and different MRBT call methods completely.

### Embodiment 4

In the fourth embodiment, the CRBT service is implemented through IMS videophone and forking. The block diagram of playing the MRBT service conditionally in the fourth embodiment is the same as that in the third embodiment. That is, in the whole network architecture, the MRBT AS is connected to the presence server and communicates with the presence server by means of a SIP protocol through a PRS-3 interface defined by the presence server.

The forking mode of setting up the MRBT service is similar to that in the network architecture defined by early media, but differs in the network call mode only.

In the forking mode, because the IMS method is applied, the provision of presence information is still based on the SIP mode. In the process of carrying out the MRBT service, the AS may query the presence information to select the call procedure.

For two different IMS implementation modes, the presence information may carry different communication capabilities to the AS in the call process, or the presence information may carry a flag of the CRBT service type supported by the UE. When the UE performs the MRBT service, the AS may query the presence information to select the call procedure. For example, the UE sends the presence information which indicates support of the early media or the forking mode. In this way, the UE does not need to change the call signaling different from the videophone in the session initiation process.

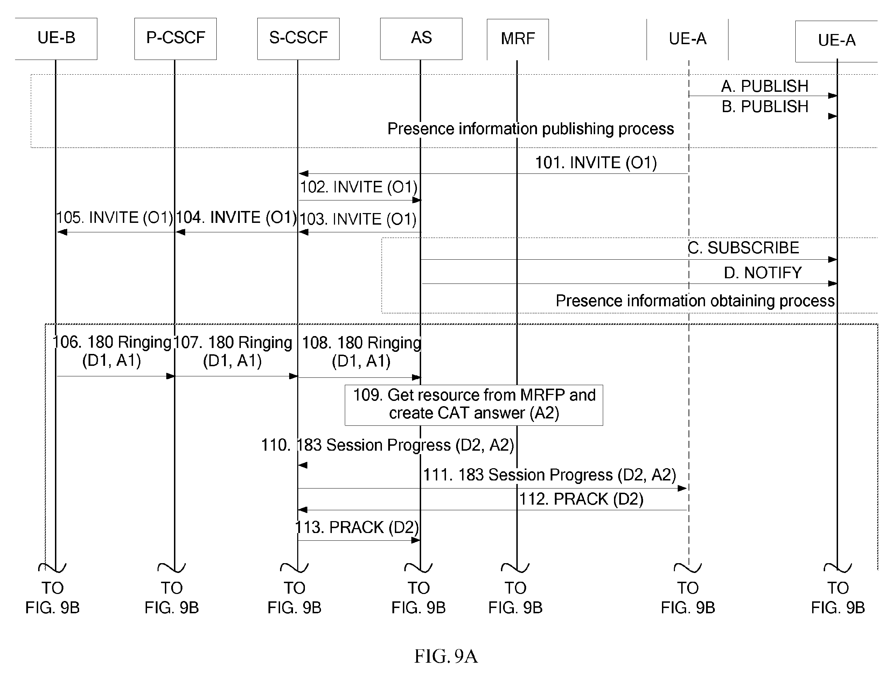

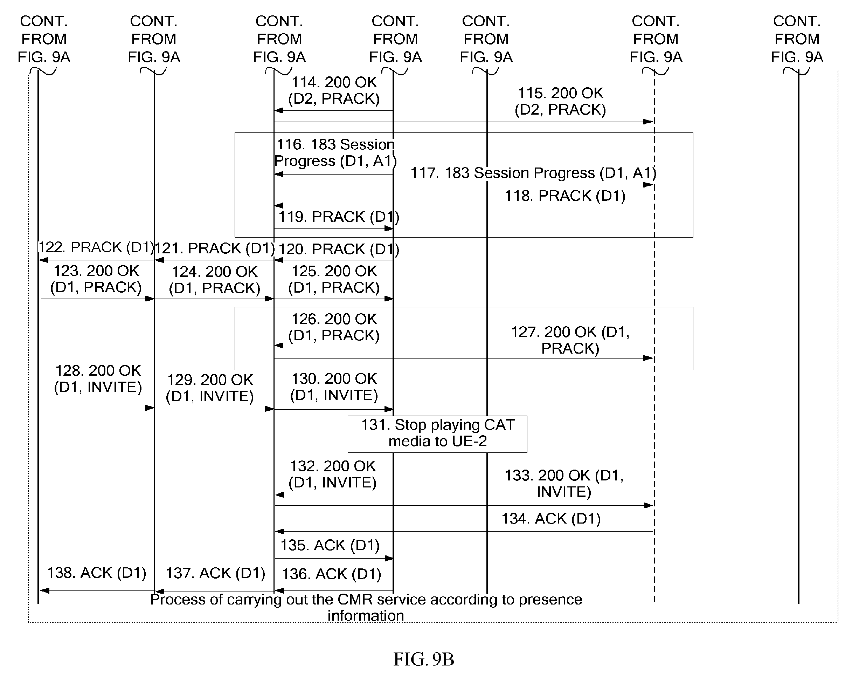

FIG. 9 is a signaling flowchart of implementing a videophone MRBT service in the IMS mode according to the third embodiment of the present invention. The signaling flowchart is detailed below:
A. UE-A sends UE presence information related to UE-A to the presence server through a Publish method of the SIP signaling. The presence information may carry the user state information, UE capability information, and service information. For example, the information indicates whether the UE supports the MRBT service, and supports which type of MRBT service.
B. UE-B applies the Publish method of the SIP signaling, and the reporting mode and the content are the same as those in step A. It should be noted that the whole presence reporting process is not a focus of the CRBT service, and is regarded as an outband process of this solution. Step A and step B do not differ essentially in terms of the forking mode and the early media mode.
   101-102. UE-A sends an Invite request to UE-B, requesting to set up a call between them. The request carries an SDP OFFER (O1). The Invite request is triggered by the iFC of the S-CSCF, and is routed to the AS.
   103-105. The AS forwards the initial Invite request to UE-B.
C. After receiving the Invite request, the AS needs to initiate a query process to the presence server to query for UE-related presence information such as the user state (whether the CRBT service is enabled, and whether the play needs to be customized), CRBT preferred by the user, or even user location information. By querying for such information, the AS can obtain the user state information, UE service information, and UE capability information. After such information is queried for, the AS can perform the following work. First, the AS decides whether to carry out the CRBT service; second, if the CRBT service needs to be carried out, the AS decides the type of CRBT service to be carried out; third, after it is determined that the CRBT service needs to be carried out, the AS selects a proper solution, for example, forking mode or early media mode; finally, the AS provides the CRBT service in the call process. Besides, if the user has set the rules of playing the CRBT service according to the presence information, for example, playing the CRBT service according to the user state or user location information, or even the user has selected the CRBT content, the AS service needs to control the MRF according to the found presence information to carry out the CRBT service correctly.
D. The presence server returns the required presence information according to the query request from the MRBT server.
   106-108. UE-B sends a "180 Ringing" response that carries an SDP Answer (A1) to set up an early session (D1). The response arrives at the AS first.
   109. The AS requests media resources from the MRFP, and creates an Answer (A2) of CAT media resources. Depending on the operation policy, steps 109-115 may be performed after step 2 and before the Invite request is forwarded to UE-B.
   110-111. The AS generates a "183 Session Progress" message as a PRACK, and sends it to UE-A. This process should be as if the AS receives a response corresponding to a forked Invite message, and UE-A uses this response to set up an early session (D2). The "183 Session Progress" avoids triggering of the local CAT of UE-A. This response carries an SDP Answer (A2), and helps to set up an MRBT play path between the MRFP and UE-A.
   112-113. UE-A confirms this PRACK message.
   114-115. The AS sends a 200 OK response to confirm the PRACK message sent by UE-A.
   116-117. The AS modifies the "180 Ringing" response received by UE-B to "183 Session Progress", adds the same Answer (A1) to this response, and forwards the response to UE-A to set up an early session (D1). Based on the operation policy, steps 116-119 and steps 126-127 are ignorable if the AS chooses to store the Answer (A1) received from UE-B and does not send a PRACK message immediately. UE-A still needs to store SDP Answer A1 and A2 because it does not know which Answer will be confirmed finally.
   118-119. UE-A confirms the PRACK message.
   120-125. The AS confirms the PRACK message sent from UE-B.
   128-130. The user of UE-B answers this call finally. UE-B sends a 200 OK response, which arrives at the AS first.
   131. The AS notifies the MRFP to stop sending CAT media to the UE.
   132-133. The AS forwards a 200 OK response to UE-A to confirm the early session (D1). If the AS does not send the Answer (A1) of UE-B to UE-A in step 116, the AS needs to add the Answer (A1) to the 200 OK response to confirm the session (D1).
   134-138. UE-A confirms the session (D1). Based on the SDP OFFER (O1 and Answer(A1), a call setup process between UE-A and UE-B is completed. The early session (D2) set up through "183 Session Progress" is ended automatically due to timeout of waiting for the response.

In the fourth embodiment, the process includes three steps:
Step 1: Presence information reporting process: The fourth embodiment briefly describes how the information is reported to the server, but this reporting process is an outband process not related to the CRBT service.
Step 2: The AS queries the presence server for the presence information of the user or UE. Such information serves as a basis for deciding whether to carry out the CRBT service, which type of CRBT service needs to be carried out, the procedure for carrying out the CRBT service, and the CRBT content and mode to be selected in the CRBT service process.
Step 3: This step is a process of setting up the CRBT service and call. This process is the detailed implementation of the CRBT service. In the fourth embodiment, it is assumed that the CRBT service is set up through forking. The present invention is not limited to that, namely, not limited to the mode of sending a ring back tone to the calling UE. In an alternative solution, a CRT may be sent to the called UE.

The fourth embodiment describes the foregoing process with respect to the method and procedure. Through the fourth embodiment, the CRBT service can make full use of the presence information in the service implementation process, and provide more personalized MRBT services. Meanwhile, the CRBT service can be integrated with the existing IMS videophone call and different MRBT call methods completely.

### Embodiment 5

The fifth embodiment is one of the embodiments about playing an MRBT service conditionally through a UE. The method includes the following steps:
The UE generates MRBT media information or rules according to presence information of a user.
The UE generates MRBT media data according to the MRBT media information or rules.
The UE plays the MRBT media data.

The presence information includes not only the presence information defined by the presence service, but also CRBT enabling data, CRBT capability data, UE location data, UE state data, or blacklist data, or any combination thereof.

The step of generating MRBT media information or rules according to the received presence information refers to: generating CRBT media information or rules, CRT media information or rules, or CBT media information or rules according to the presence information.

In the fifth embodiment, the specific bearer mode of a videophone is ignored, but the actions of the UE in the process are specified. The prerequisites of this solution are specific to a call origination process and a call termination process. Although the two processes are similar in service implementation, they are discussed together herein.

In the CRBT setup process, the type of the call to be set up by the UE may be set. "CRBT" mentioned here includes ring back tone and CRT. The type may indicate:
whether to accept the MRBT; and
type of the accepted MRBT.

The foregoing actions depend on the following conditions:
The current environment of the user: If the current environment of the user is a conference, the UE will not present the accepted content after receiving the CRT according to the local setting of the UE, but implement it through a User Interface (UI) prompt simply. In this process, because the UE knows the type of the service to be implemented and the actions to be implemented by the UE in the media negotiation process, the UE can implement such functions in light of the environment (user state setting) of the UE. Similarly, in the mute mode of the CRT service, the UE presents the video content only, and does not present the audio content. On other occasions, if a setting of rejecting setup of an MRBT service exists on the UE locally, the UE can play a ring tone locally in place of the multimedia content delivered by the network.

User expectation: If the user expects to carry out a certain type of CRBT but does not expect another type of CRBT, the UE may distinguish the CRBT services according to the calling party information or called party information in the call process, service identifier, content type, and time information; and choose to present a CRBT service, a part of the CRBT service, or no CRBT service.

Settings defined by the user: User defined settings refer to other parameters, for example, the user sets a location area in which the UE receives no CRBT, or the UE receives no CRBT in the roaming state.

The issue addressed in the fifth embodiment is: The conditions of playing the CRBT are set through no server, namely, the server provides no individuation CRBT service. The CRBT service between the UE and the server is carried out in a normal procedure. In this case, the UE can perform local filtering as regards whether to present the CRBT content to the user or how to present the CRBT to the user according to the conditions of the UE, for example, the network condition, location, time, and user state (such as busy or at business conference), and mood.

A UE provided in an embodiment of the present invention includes:
an information generating unit, configured to generate MRBT media information or rules according to presence information of a user;
a media data generating unit, configured to generate MRBT media data according to the MRBT media information or rules; and
an MRBT playing unit, configured to play the MRBT media data.

In this way, the UE provides the function of playing the MRBT service conditionally, which is similar to the network mode.

The solution to playing MRBTs conditionally in embodiments of the present invention is a method for implementing MRBTs in the VP process. This method overcomes the following problems in the prior art: The MRBT service in the prior art is triggered according to service subscription only, and cannot be played according to location information or user presence information. This method enables diverse triggering modes of the MRBT service so that the user can select the triggering mode as required.

Detailed above are the objectives, technical solution and benefits of the embodiments of the present invention. Although the invention has been described through some exemplary embodiments, the invention is not limited to such embodiments. It is apparent that those skilled in the art can make modifications and variations to the invention without departing from the spirit and scope of the invention. The invention is intended to cover the modifications and variations provided that they fall within the scope of protection defined by the following claims or their equivalents.

## Claims

1. A method for playing Multimedia Ring Back Tones (MRBTs), comprising:
generating MRBT media information or rules according to presence information of a user;
generating MRBT media data according to the MRBT media information or rules; and
sending the MRBT media data to a User Equipment (UE) for playing.

2. The method for playing MRBTs according to claim 1, wherein:
the presence information comprises not only presence information defined by a presence service, but also Customized Ring Back Tone (CRBT) enabling data, CRBT capability data, UE location data, UE state data, or blacklist data, or any combination thereof.

3. The method for playing MRBTs according to claim 1, further comprising:
receiving the presence information of the user from the UE, and generating the MRBT media information or rules according to the presence information.

4. The method for playing MRBTs according to claim 3, wherein the step of generating the MRBT media information or rules according to the received presence information is:
generating Customized Ring Back Tone (CRBT) media information or rules, Customized Ring Tone (CRT) media information or rules, or Customized Background Tone (CBT) media information or rules according to the presence information.

5. The method for playing MRBTs according to claim 4, further comprising:
generating the CRBT media information or rules for a calling UE according to presence information sent from a calling UE and/or presence information sent from a called UE.

6. The method for playing MRBTs according to claim 5, further comprising:
generating the CRBT media information or rules for the calling UE according to the presence information sent from the calling UE or the presence information sent from the called UE, depending on which one of the presence information sent from the calling UE and the presence information sent from the called UE has a higher priority; or
generating the CRBT media information or rules for the calling UE according to the presence information sent from the calling UE; or
generating the CRBT media information or rules for the calling UE according to the presence information sent from the called UE.

7. The method for playing MRBTs according to claim 1, wherein the step of generating the MRBT media data according to the MRBT media information or rules comprises:
generating Customized Ring Tone (CRT) media data sent to a called user; and/or
generating Customized Ring Back Tone (CRBT) media data sent to a calling user.

8. The method for playing MRBTs according to claim 7, further comprising:
sending the CRT media data to a called UE for playing; and/or
sending the CRBT media data to a calling UE for playing.

9. A method for playing Multimedia Ring Back Tones (MRBTs), comprising:
receiving presence information sent from a User Equipment (UE);
generating MRBT media information or rules according to the received presence information;
storing mapping relations between the generated MRBT media information or rules and the UE;
searching for MRBT media information or rules related to UEs among the stored mapping relations according to a call request;
generating MRBT media data of a calling UE and MRBT media data of a called UE according to the found MRBT media information or rules; and
sending the generated MRBT media data to a corresponding UE for playing.

10. The method for playing MRBTs according to claim 9, wherein the presence information received from the UE is:
Customized Ring Back Tone (CRBT) enabling setting data, CRBT capability setting data, UE location data, UE state setting data, or blacklist setting data, or any combination thereof; and the presence information defined by a presence service.

11. The method for playing MRBTs according to claim 10, wherein the step of receiving the presence information sent from the UE comprises:
receiving presence information sent from the calling UE; and/or
receiving presence information sent from the called UE.

12. The method for playing MRBTs according to claim 9, wherein the step of generating the MRBT media information or rules according to the received presence information is:
generating Customized Ring Back Tone (CRBT) media information or rules, Customized Ring Tone (CRT) media information or rules, or Customized Background Tone (CBT) media information or rules according to the presence information.

13. The method for playing MRBTs according to claim 12, wherein:
the step of generating the MRBT media data of the calling UE and the MRBT media data of the called UE according to the found MRBT media information or rules comprises:
generating CRBT media data or CBT media data for the calling UE; and
generating CRT media data or CBT media data for the called UE.

14. The method for playing MRBTs according to claim 13, wherein:
the step of sending the generated MRBT media data to the corresponding UE for playing comprises:
sending the CRBT media data or CBT media data generated for the calling UE to the calling UE for playing; and
sending the CRT media data or CBT media data generated for the called UE to the called UE for playing.

15. The method for playing MRBTs according to claim 11, further comprising:
generating CRBT media information or rules for the calling UE according to presence information sent from the calling UE and/or presence information sent from the called UE.

16. The method for playing MRBTs according to claim 15, further comprising:
generating CRBT media information or rules for the calling UE according to the presence information sent from the calling UE or the presence information sent from the called UE, depending on which one of the presence information sent from the calling UE and the presence information sent from the called UE has a higher priority; or
generating the CRBT media information or rules for the calling UE according to the presence information sent from the calling UE; or
generating the CRBT media information or rules for the calling UE according to the presence information sent from the called UE.

17. An apparatus for playing Multimedia Ring Back Tones (MRBTs), comprising:
an information generating unit, configured to generate MRBT media information or rules according to presence information of a user;
a media data generating unit, configured to generate MRBT media data according to the MRBT media information or rules; and
a sending and playing unit, configured to send the MRBT media data to a User Equipment (UE) for playing.

18. An apparatus for playing Multimedia Ring Back Tones (MRBTs), comprising:
an information receiving unit, configured to receive presence information sent from a User Equipment (UE);
a media information or rule generating unit, configured to generate MRBT media information or rules according to the received presence information;
a storing unit, configured to store mapping relations between the generated MRBT media information or rules and the UE;
a searching unit, configured to search for MRBT media information or rules related to UEs among the stored mapping relations according to a call request;
a media data generating unit, configured to generate MRBT media data of a calling UE and MRBT media data of a called UE according to the found MRBT media information or rules; and
an outputting unit, configured to send the generated MRBT media data to a corresponding UE for playing.

19. The apparatus for playing MRBTs according to claim 18, wherein the presence information comprises:
Customized Ring Back Tone (CRBT) enabling setting data, CRBT capability setting data, UE location data, UE state setting data, or blacklist setting data, or any combination thereof.

20. The apparatus for playing MRBTs according to claim 19, wherein:
the information receiving unit receives presence information sent from the calling UE and presence information sent from the called UE.

21. The apparatus for playing MRBTs according to claim 18, wherein:
the media information or rule generating unit generates Customized Ring Back Tone (CRBT) media information or rules, Customized Ring Tone (CRT) media information or rules, or Customized Background Tone (CBT) media information or rules according to the presence information.

22. The apparatus for playing MRBTs according to claim 21, wherein:
the media data generating unit generates CRBT media data or CBT media data for the calling UE, and generates CRT media data or CBT media data for the called UE.

23. The apparatus for playing MRBTs according to claim 22, wherein:
the outputting unit is configured to:
send the CRBT media data or CBT media data generated for the calling UE to the calling UE for playing; and
send the CRT media data or CBT media data generated for the called UE to the called UE for playing.

24. The apparatus for playing MRBTs according to claim 20, wherein:
the media information or rule generating unit generates CRBT media information or rules for the calling UE according to the presence information sent from the calling UE and/or the presence information sent from the called UE.

25. The apparatus for playing MRBTs according to claim 24, wherein:
the media information or rule generating unit is configured to:
generate the CRBT media information or rules for the calling UE according to the presence information sent from the calling UE or the presence information sent from the called UE, depending on which one of the presence information sent from the calling UE and the presence information sent from the called UE has a higher priority; or
generate MRBT media information or rules for the calling UE according to the presence information sent from the calling UE; or
generate the MRBT media information or rules for the calling UE according to the presence information sent from the called UE.

26. A system for playing Multimedia Ring Back Tones (MRBTs), comprising an apparatus for playing MRBTs and a User Equipment (UE), wherein:
the UE generates presence information and sends it to the apparatus for playing MRBTs; and
the apparatus for playing MRBTs receives the presence information, generates MRBT media data according to the presence information, and sends the generated MRBT data to a corresponding UE for playing.

27. A method for playing Multimedia Ring Back Tones (MRBTs), comprising:
by a User Equipment (UE), generating MRBT media information or rules according to presence information of a user;
generating MRBT media data according to the MRBT media information or rules; and
playing the MRBT media data.

28. The method for playing MRBTs according to claim 27, wherein:
the presence information comprises not only presence information defined by a presence service, but also Customized Ring Back Tone (CRBT) enabling data, CRBT capability data, UE location data, UE state data, or blacklist data, or any combination thereof.

29. The method for playing MRBTs according to claim 27, wherein:
the step of generating the MRBT media information or rules according to the received presence information is:
generating Customized Ring Back Tone (CRBT) media information or rules, Customized Ring Tone (CRT) media information or rules, or Customized Background Tone (CBT) media information or rules according to the presence information.

30. A User Equipment (UE), comprising:
an information generating unit, configured to generate Customized Multimedia Ringback tone (MRBT) media information or rules according to presence information of a user;
a media data generating unit, configured to generate MRBT media data according to the MRBT media information or rules; and
an MRBT playing unit, configured to play the MRBT media data.
